# FASCICULE DE BREVET EUROPEEN

(11) **EP 1 193 887 B1**
(45) Date de publication et mention de la délivrance du brevet: **07.12.2005**
(21) Numéro de dépôt: 01000433.1
(22) Date de dépôt: 07.09.2001
(51) Int. Cl.: H04B 1/28, H04B 1/40

(54) **Circuit de réception multibandes dans un téléphone mobile et procédé de réception associé**
Verfahren und Schaltung eines Multibandempfänger in einem Mobilfunktelefon
Multiband receiver circuit in a mobile telephone , and a method therefor

(30) Priorité: 07.09.2000 FR 0011432
(43) Date de publication de la demande: 03.04.2002
(73) Titulaire: Sagem SA, 75015 Paris (FR)
(72) Inventeur: Romao, Fernando, 78360 Montesson (FR)
(74) Mandataire: Schmit, Christian Norbert Marie

(56) Documents cités:
- EP-A- 0 784 381
- JENTSCHEL H -J ET AL: "MULTIMODALE FUNKTELEFONE" NACHRICHTENTECHNIK ELEKTRONIK,VEB VERLAG TECHNIK. BERLIN,DE, vol. 46, no. 3, 1 mai 1996 (1996-05-01), pages 33-39, XP000592349 ISSN: 0323-4657

## Description

La présente invention a pour objet un circuit de réception multibandes dans un téléphone mobile. Elle a aussi pour objet un procédé de réception associé à ce circuit de réception. Le but de l'invention est de permettre la réalisation d'un circuit de réception multibandes faisant intervenir un minimum de composants électroniques afin de limiter son coût de réalisation.

Un récepteur multibandes est un récepteur capable de recevoir des signaux qui ont été émis dans différentes bandes de fréquence conformément aux recommandations de différentes normes. Par exemple, un tel récepteur peut recevoir des signaux émis dans une bande de fréquence associée au GSM (Global System for Mobile communication en anglais pour Système Global de Téléphonie Mobile en français) ou alors dans une bande de fréquence associée au système UMTS (Universal Mobile Telecommunication System en anglais pour System de Téléphonie Mobile Universelle en français). La bande de fréquence associée au système GSM se situe autour de 900 mégahertz (MHz), alors que la bande de fréquence utilisée pour la norme UMTS se situe autour de 2100 mégahertz. On connaît par ailleurs la norme DCS dans laquelle la bande de fréquence est de l'ordre de 1800 mégahertz. Dans la suite de la description, la désignation norme GSM fera référence implicitement d'une part à la norme GSM à proprement parler, et d'autre part à la norme DCS. Le document EP 0 784 381 divulgue plusieurs circuits de réception bibandes.

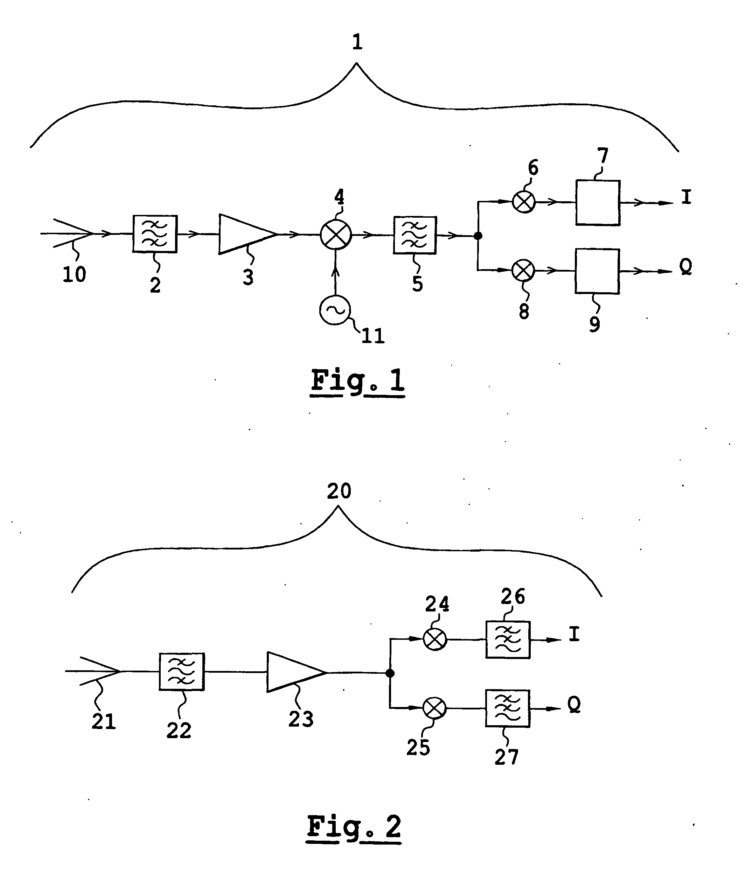

Un circuit de réception, ou chaîne de réception, classique est représenté de façon schématique à la figure 1. Sur cette figure, on voit qu'un signal reçu par un circuit récepteur 1 transite successivement par un premier filtre passe-bande 2, par un amplificateur 3, par un transposeur 4,par un deuxième filtre passe-bande 5, par un deuxième mélangeur 6 associé à un premier circuit de traitement de signaux en bande de base 7, ou par un troisième mélangeur 8 associé à un deuxième circuit de traitement en bande de base 9.

De façon simplifiée, le fonctionnement d'un tel circuit de réception est le suivant : les signaux sont reçus sur une porteuse par une antenne 10 et transmis au premier filtre passe-bande 2. Ce filtre 2 laisse passer une bande de fréquence relativement large qui comprend bien évidemment la bande de fréquence utilisée pour la transmission des signaux selon la norme à laquelle est dédié le récepteur 1. Les signaux ainsi filtrés sont amplifiés au moyen de l'amplificateur 3 et sont transmis au transposeur 4. Un signal à une fréquence intermédiaire est alors obtenu par une combinaison différence, réalisée au moyen du transposeur 4, entre la porteuse et un signal auxiliaire de mélange, appelé signal hétérodyne, émis à une fréquence dite fréquence hétérodyne. Cette fréquence hétérodyne est produite à l'aide d'un oscillateur local 11. Le transposeur 4 est généralement un mélangeur, c'est-à-dire un dispositif non linéaire permettant d'obtenir différentes combinaisons entre deux signaux, dont notamment la combinaison différence.

Une fois transposés à la fréquence intermédiaire, les signaux sont filtrés par le deuxième filtre passe-bande 5, appelé filtre passe-bande à fréquence intermédiaire. Ce filtre 5 est centré sur la fréquence intermédiaire et a une bande passante qui permet de réaliser un filtrage de canal des signaux reçus. Par filtrage de canal, on désigne un filtrage qui ne laisse passer que les signaux vraiment utiles relativement à la norme de télécommunication considérée. Les signaux ainsi filtrés sont ensuite transmis soit vers le deuxième mélangeur 6 soit vers le troisième mélangeur 8 pour récupérer chacune des deux composantes des signaux reçus sur l'antenne 10, ces signaux étant en effet le plus souvent, modulés en phase et en quadrature. Chacun de ces mélangeurs est relié à un oscillateur local, non représenté, qui fournit à chaque mélangeur un signal hétérodyne de fréquence telle que les signaux issus des mélangeurs 6 et 8 sont des signaux en bande de base. Les circuits de traitement en bande de base 7 et 9 interviennent alors pour récupérer les informations utiles contenues dans les signaux.

Le rôle du transposeur 4 est de transposer les signaux reçus à une fréquence intermédiaire, cette fréquence étant comprise entre la fréquence porteuse et la basse fréquence du signal modulant objet de la transmission. Les opérations de filtrage au moyen du filtre passe-bande à fréquence intermédiaire 5 sont ainsi plus faciles à réaliser que si on avait traité directement des signaux à la fréquence de la porteuse. Dans le cas de la norme GSM, le filtre passe-bande à fréquence intermédiaire 5 est centré sur une fréquence de quelques centaines de mégahertz, par exemple 400 MHz, et a une bande passante d'environ 200 kHz, qui correspond à la bande passante des signaux utiles dans la norme GSM. Ce filtre passe-bande est donc très sélectif, et par conséquent cher à réaliser. Dans le cas de la norme UMTS, le filtrage de canal est réalisé au moyen d'un filtre intermédiaire 5 centré sur une fréquence de quelques centaines de mégahertz (par exemple 300 MHz) ; ce filtre possède une bande passante d'environ 4 MHz.

On voit donc à la figure 1 qu'un circuit de réception fait intervenir un nombre relativement important de composants. En outre, lorsqu'un circuit de réception est bibandes, le circuit de réception 1 de la figure 1 doit être réalisé une deuxième fois pour la réception des signaux correspondant à la deuxième norme. Il en résulte que la conception et la réalisation de circuits de réception multibandes est chère et volumineuse.

Un des objectifs principaux des constructeurs de tels circuits de réception est donc de simplifier la chaîne de réception présentée à la figure 1. Une des solutions proposées consiste à réaliser un circuit de réception dit à conversion directe, ou encore circuit de réception à transposition ZIF (Zero Intermediate Frequency pour Fréquence Intermédiaire Nulle). Un tel circuit est représenté à la figure 2. Sur cette figure, on voit que des signaux reçus par un circuit récepteur 20 transite successivement par une antenne 21, par un premier filtre passe-bande 22, par un amplificateur 23, puis directement par un des transposeurs 24 ou 25, qui sont de préférence des mélangeurs, disposés de façon à récupérer chacun une des deux composantes des signaux reçus, et enfin par un des circuits de traitement de signaux en bande de base 26 ou 27, chacun de ces circuits étant relié à un des transposeurs 24 ou 25.

Dans ce circuit de réception, chacun des deux transposeurs 24 ou 25 est connecté à un filtre 26 ou 27. La transposition effectuée au niveau des transposeurs 24 et 25 permet de retrouver directement le signal modulant. Les circuits à conversion directe font donc intervenir moins de composants que les circuits de réception tels que celui représenté à la figure 1.

Cependant, avec une conversion directe, il existe de gros problèmes de compensation d'offsets, ainsi que des problèmes de rayonnement de l'oscillateur local vers l'antenne de réception associée au récepteur. Plus particulièrement, dans le cas de la norme GSM, les problèmes rencontrés dans le cas d'un circuit de réception à transposition ZIF sont les suivants :
- grandes difficultés de réalisation des mélangeurs 24 et 25 car la norme GSM impose de résister à des signaux de brouillage qui sont situés à 6 MHz de la fréquence porteuse et qui ont des niveaux très élevés par rapport au signal utile. Or un mélangeur présente le plus souvent des caractéristiques de non linéarité d'ordre 2. Ce problème de non linéarité d'ordre 2 se traduit, lorsque l'on ajoute un signal de brouillage, par la présence de signaux parasites en sortie du mélangeur, ces signaux parasites, et notamment ceux d'ordre 2, comportant une composante continue. Or dans la norme GSM, les signaux utiles ramenés en bande de base comportent de l'énergie à des fréquences très faibles ;
- les oscillateurs locaux produisant un signal à 900 MHz ou 1800 MHz envoyé dans les mélangeurs 24 et 25, ce signal peut remonter la chaîne du circuit émetteur 20 parce que l'amplificateur 23 n'est pas isolé et parce que le filtre passe-bande 22 est centré sur cette fréquence. On observe alors un phénomène de rayonnement au niveau de l'antenne 21.

La présente invention permet de répondre à l'ensemble des problèmes qui viennent d'être exposés. En effet, le circuit de réception selon l'invention, et le procédé de réception associé, permettent de réaliser un récepteur multibandes, et dans un cas particulier bimode, qui permet de limiter le nombre de composants présents dans les chaînes de réception dédiées à la réception de signaux émis selon une norme, tout en ne présentant pas les problèmes rencontrés notamment lors de la réalisation d'un circuit de réception en transposition ZIF.

L'invention peut plus particulièrement être mise en oeuvre dans le cas où le filtre passe-bande intermédiaire, utilisé dans une première chaîne de réception et qui sert à réaliser un filtrage de canal pour cette chaîne de réception, présente les caractéristiques nécessaires pour effectuer le filtrage de l'ensemble des signaux de brouillage devant être filtrés d'après les recommandations de la norme selon laquelle sont transmis les signaux destinés à une deuxième chaîne de réception, et les caractéristiques nécessaires pour filtrer des signaux parasites générés par la présence des signaux de brouillage dans une chaîne de réception. Ce cas de figure se présente par exemple lorsque la première norme est la norme UMTS et la deuxième norme est la norme GSM : en effet, le filtrage de canal pour la norme UMTS est effectué à l'aide d'un filtre passe-bande à fréquence intermédiaire de bande passante d'environ 4 MHz centrés sur une fréquence intermédiaire donnée, alors que la norme GSM imposant de résister à des signaux de brouillage situés à 6 MHz de la porteuse. Le circuit de réception selon l'invention comporte donc notamment, pour les deux chaînes de réception qui sont chacune dédiées à la réception d'un signal selon un norme particulière, un unique premier mélangeur, selon les termes employés pour décrire une chaîne de réception classique telle que celle représentée à la figure 1. Cet unique premier mélangeur est facile à réaliser car il requiert des caractéristiques de non linéarité beaucoup moins contraignantes que dans le cas du circuit de réception à transposition ZIF.

L'invention concerne donc un circuit de réception multibandes dans un téléphone mobile susceptible de recevoir des premiers signaux radioélectriques transmis à une première fréquence porteuse selon une première norme de télécommunication mobile, et des deuxièmes signaux radioélectriques transmis à une deuxième fréquence porteuse selon une deuxième norme de télécommunication mobile selon la revendication 1.

Dans un mode de réalisation particulier, la première norme de télécommunication est la norme UMTS, et la deuxième norme de télécommunication est la norme GSM. De façon préférée, le filtre passe-bande à fréquence intermédiaire a une largeur de bande comprise entre trois et quatre mégahertz, et il est centré sur une fréquence comprise entre 350 mégahertz et 450 mégahertz.

De préférence, le dispositif d'oscillateur local est constitué d'un premier oscillateur local et d'un deuxième oscillateur local, le premier oscillateur local produisant le premier signal hétérodyne à une première fréquence telle que les premiers signaux, en sortie du premier mélangeur, aient une fréquence porteuse correspondant à la fréquence centrale du filtre passe-bande à fréquence intermédiaire, et le deuxième oscillateur local produisant le premier signal hétérodyne à une deuxième fréquence telle que les deuxièmes signaux, en sortie du premier mélangeur, aient une fréquence porteuse correspondant à la fréquence centrale du filtre passe-bande à fréquence intermédiaire.

L'invention concerne également un procédé de réception d'un signal dans un téléphone multibande selon la revendication 6.

Le procédé selon l'invention est avantageusement mis en oeuvre lorsque la première norme est la norme UMTS et la deuxième norme est la norme GSM.

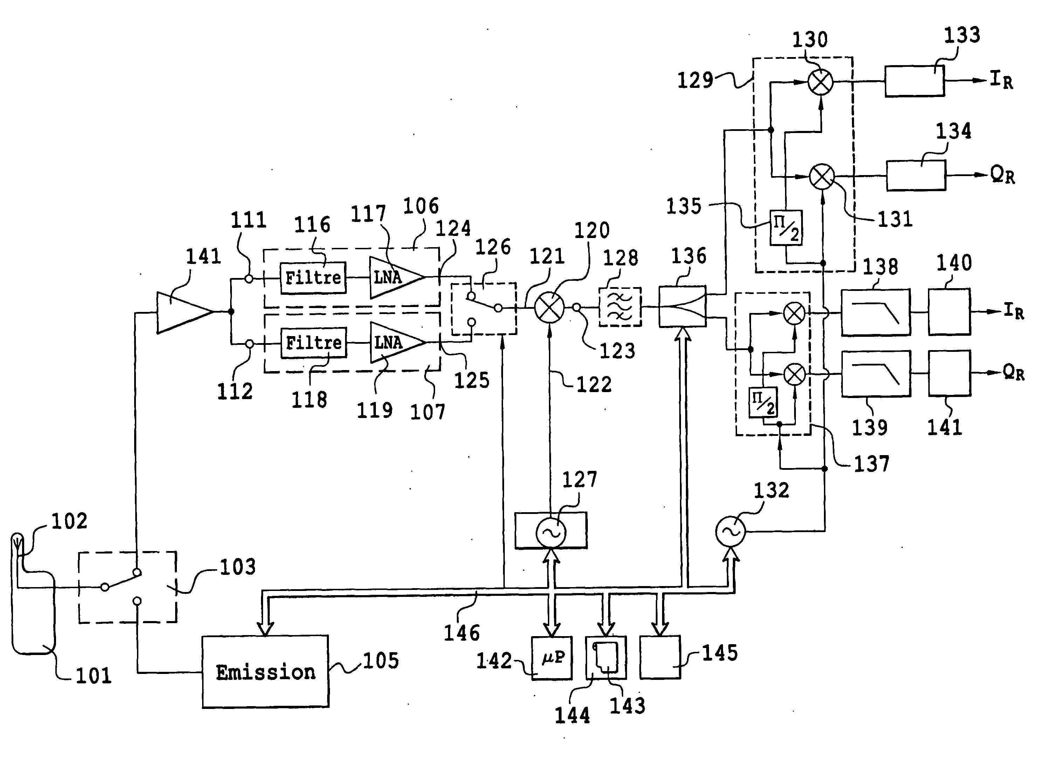

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- A la figure 1, déjà décrite, un circuit de réception classique utilisé en téléphonie mobile ;
- A la figure 2, déjà décrite, un circuit de réception à transposition ZIF utilisée en téléphonie mobile ;
- A la figure 3, un circuit de réception multibandes selon l'invention.

La figure 3 montre un téléphone 101 comportant une antenne 102. L'antenne 102 est reliée par l'intermédiaire d'un circuit 103 d'une part à un dispositif 104 de réception et d'autre part à un dispositif 105 d'émission. Le circuit 103 est composé d'un duplexeur assurant une séparation fréquentielle dans le cas de l'UMTS, et d'un commutateur assurant une séparation temporelle dans le cas du GSM, ceci vis-à-vis de l'émission et de la réception. Le dispositif 105 ne sera pas plus détaillé dans le reste de la description.

Dans l'invention, on utilise un téléphone 101 de type bibandes. Ainsi, le dispositif 104 comporte une première voie 106 de réception et une deuxième voie 107 de réception. La voie 106 est associée à une bande B1 de fréquence et la voie 107 est associée à une bande B2 de fréquence. L'antenne 102 est reliée à une entrée 111 de la première voie de réception 106 et à une entrée 112 de la deuxième voie de réception 107. Le circuit de réception 104 selon l'invention pourrait cependant être réalisé avec deux antennes distinctes, chacune de ces antennes étant alors reliée à une des voies de réception 106 ou 107.

La voie de réception 106, respectivement 107, a pour fonction principale de filtrer et de préamplifier des premiers signaux reçus par l'entrée 111, respectivement par l'entrée 112, en provenance de l'antenne 102. La voie 106 comporte pour cela un filtre passe-bande 116 accordé, centré, sur la bande de fréquence B1 et un amplificateur 117 en cascade avec le filtre 116. De la même manière la voie 107 comporte un filtre passe-bande 118 accordé, centré, sur la bande de fréquence B2 et un amplificateur 119 en cascade avec le filtre 118. De préférence, les amplificateurs 117 et 119 sont des amplificateurs à faible bruit.

Ainsi, selon que les signaux reçus sur l'antenne 102 sont des premiers signaux transmis selon une norme dont la fréquence porteuse appartient à la bande B1 de fréquence, ou selon que les signaux reçus sur l'antenne 102 sont des deuxièmes signaux transmis selon une deuxième norme dont la fréquence porteuse appartient à la bande B2 de fréquence, on récupérera ces premiers et deuxièmes signaux respectivement en sortie de la première voie de réception 106, alors activée, ou en sortie de la deuxième voie de réception 107, alors activée. Les termes "premiers signaux", respectivement "deuxièmes signaux" désigneront toujours les signaux transmis selon une première norme, respectivement selon une deuxième norme, par la première voie de réception 106, respectivement par la deuxième voie de réception 107.

Le dispositif de réception 104 comporte un transposeur de fréquence 120. Le transposeur 120 est généralement un premier mélangeur 120. Le premier mélangeur 120 comporte une première entrée 121, une deuxième entrée 122, et une sortie 123. Dans un exemple, le dispositif de réception 104 peut comporter en outre un commutateur 126. Ce commutateur 126 permet de relier soit une deuxième extrémité 124 de la voie 106, soit une deuxième extrémité 125 de la voie 107 à l'entrée 121.

La deuxième entrée 122 du mélangeur 120 reçoit un signal hétérodyne produit par un dispositif d'oscillateur local 127 afin de permettre une transposition de fréquence des premiers signaux dans la bande B1, ou des deuxièmes signaux dans la bande B2, vers un fréquence intermédiaire prédéterminée.

Un filtre passe-bande dit à fréquence intermédiaire est relié à la sortie 123 du mélangeur 120. Dans un exemple préféré, la fréquence intermédiaire sur laquelle est centré le filtre passe-bande à fréquence intermédiaire 128 a une valeur comprise entre 350 et 450 MHz. La bande passante de ce filtre passe-bande à fréquence intermédiaire est par ailleurs de l'ordre de 4 MHz. Ainsi, le filtre passe-bande à fréquence intermédiaire 128 réalise un excellent filtrage de canal pour des signaux transmis selon la norme UMTS. C'est d'ailleurs ce type de filtre qui est effectivement utilisé dans les circuits de réception monobande UMTS pour réaliser le filtrage de canal.

Ainsi, en raison de la bande passante utilisée dans ce filtre passe-bande à fréquence intermédiaire, des signaux de brouillage situés à 6 MHz de la fréquence porteuse, et qui doivent être filtrés selon les recommandations de la norme GSM, sont effectivement filtrés à ce niveau. De plus, le mélangeur 120 est beaucoup moins difficile à réaliser que les mélangeurs 24 et 25 de la figure 2 représentant un circuit de réception à transposition ZIF, car les contraintes de non linéarité sont beaucoup moins importantes pour le premier mélangeur 120 que pour les mélangeurs 24 et 25. En effet, les composantes continues, qui peuvent être créées notamment à cause des caractéristiques de non linéarité d'ordre 2 du mélangeur 120, sont ici parfaitement filtrées du fait des caractéristiques élevées en fréquence (bande passante d'environ 4 MHz centrée sur une fréquence d'environ 400 MHz) du filtre passe-bande à fréquence intermédiaire 128.

Par ailleurs, il n'y a plus de risques de rayonnement au niveau de l'antenne 102 car la fréquence du signal hétérodyne délivré par le dispositif d'oscillateur local 127 est systématiquement filtrée par les filtres passe-bande 116 et 118, que le commutateur 126 soit présent ou non. La fréquence de ce signal est telle que, mélangé avec un premier signal issu de la première voie de réception 106, ou avec un deuxième signal issu de la deuxième voie de réception 107, le signal entrant dans le filtre passe-bande 128 a une fréquence porteuse sensiblement semblable à la fréquence centrale du filtre passe-bande à fréquence intermédiaire 128. Par exemple, dans le cas où les premiers signaux reçus par la première voie de réception 106 sont transmis selon la norme UMTS, soit avec une fréquence porteuse de 2100 MHz, et que les deuxièmes signaux reçus par la deuxième voie de réception 107 sont transmis selon la norme GSM, soit avec une fréquence porteuse de 1800 MHz, le dispositif d'oscillateur local 127 produit soit un signal hétérodyne à 1700 MHz pour être mélangés avec les premiers signaux reçus, ou un signal hétérodyne à 1400 MHz pour être mélangés avec les deuxièmes signaux reçus. Dans tous les cas, les premiers signaux et les deuxièmes signaux issus du premier mélangeur 120 ont une fréquence porteuse sensiblement égale à la fréquence centrale du filtre à fréquence intermédiaire 128.

Ainsi, en utilisant un filtre passe-bande à fréquence intermédiaire, utilisé habituellement pour effectuer un filtrage de canal dans une chaîne de réception de premiers signaux transmis selon une première norme, pour filtrer des signaux parasites créés par un premier mélangeur dans la propagation de signaux transmis selon une deuxième norme, le circuit de réception multibandes selon l'invention se contente d'utiliser un unique premier mélangeur, qui est, de plus, facile à réaliser. Les autres problèmes rencontrés notamment avec les circuits de réception à transposition ZIF, et notamment les problèmes de rayonnement au niveau de l'antenne sont également évités.

Dans un mode de réalisation de l'invention, le filtre passe-bande à fréquence intermédiaire 128 est relié à un aiguilleur 136 qui permet d'orienter les premiers signaux, respectivement les deuxièmes signaux, vers un premier dispositif de transposition de fréquence 129, respectivement vers un deuxième dispositif de transposition de fréquence 137.

Le fonctionnement du premier dispositif de transposition de fréquence 129 est le suivant : généralement, les signaux reçus sur l'antenne 102 sont des signaux modulés en phase et en quadrature. Cela signifie que les signaux reçus comportent deux composantes, en quadratures, une composante dite sinus et une composante dite cosinus. Aussi, pour récupérer les deux composantes de ces signaux, le premier dispositif de transposition de fréquence 129 comporte notamment un deuxième mélangeur 130 et un troisième mélangeur 131, réalisant une transposition de fréquence dans une bande de fréquence du signal modulant objet de la transmission. La bande de fréquence associée à ce signal modulant est généralement désignée par l'expression bande de base.

Une entrée de chacun de ces mélangeurs est reliée au filtre passe-bande à fréquence intermédiaire 128. Le deuxième mélangeur 130 et le troisième mélangeur 131 comportent par ailleurs chacun une deuxième entrée reliée à un oscillateur 132 de fréquence égale à la fréquence intermédiaire. Pour pouvoir récupérer une composante cosinus et une composante sinus, la deuxième entrée du troisième mélangeur 131 est reliée directement à l'oscillateur 132 alors que la deuxième entrée du deuxième mélangeur 130 est reliée à l'oscillateur 132 par l'intermédiaire d'un circuit 135 de déphasage, généralement d'une valeur de 90°. On mélange ainsi un signal présent sur la première entrée du deuxième mélangeur 130 avec un signal en cosinus et non plus par un signal en sinus comme c'est le cas au sein du troisième mélangeur 131.

Le fonctionnement du deuxième dispositif de transposition de fréquence 137 est similaire et ne sera pas détaillé d'avantage.

On obtient ainsi, en sortie de chacun des dispositifs de transposition de fréquence 129 et 137, deux signaux en bande de base produits par les mélangeurs. Les premiers signaux, issus du premier dispositif de transposition de fréquence 129 ont déjà subi un filtrage de canal au niveau du filtre passe-bande à fréquence intermédiaire 128. Ils sont donc directement traités par une première voie 133 de mise en forme et par une deuxième voie 134 de mise en forme. Par contre, les deuxièmes signaux issus du deuxième dispositif de transposition de fréquence 137 n'ont pas subi de filtrage de canal. Les deux deuxièmes signaux sont donc respectivement transmis à un premier filtre passe-bas 138 et un deuxième filtre passe-bas 139, avant d'être respectivement mis en forme par une première voie de mise en forme 140 et par une deuxième voie de mise en forme 141. Dans le cas où les deuxièmes signaux ont été transmis selon la norme GSM, les filtres passe-bas, qui ont alors une fréquence de coupure à 200 kHz, sont simples à réaliser.

Les voies 133, 134, 140 et 141 comportent divers moyens principalement de filtrage et d'amplification.

Dans une variante préférée, le dispositif 104 comporte un amplificateur 141 faible bruit à large bande entre l'antenne 102 et les voies de réception 106 et 107. En conséquence, des signaux transmis à la première voie de réception 106 et à la deuxième voie de réception 107 sont amplifiés. Or, l'atténuation d'un filtre est d'autant plus importante qu'on augmente sa sélectivité. Cependant, avec la présence de l'amplificateur 141 on peut améliorer la sensibilité des filtres passe-bande 116 et 118 tout en négligeant les pertes induites par cette augmentation de sélectivité et ce grâce à l'amplification ainsi réalisée avant filtrage.

Le téléphone 101 comporte par ailleurs un microprocesseur 142 commandé par un programme 143 dans une mémoire de programme 144, une mémoire 145 et un bus 146 de données, d'adresses et de commandes. Le dispositif d'oscillateur local 127 est réglé par le microprocesseur 142 afin de produire un signal hétérodyne tel que le signal issu du premier mélangeur 120 ait une fréquence porteuse correspondant à la fréquence intermédiaire, c'est à dire la fréquence centrale du filtre passe-bande à fréquence intermédiaire 128. Par ailleurs, le microprocesseur 142 contrôle l'aiguilleur 136 pour orienter les premiers et les deuxièmes signaux respectivement vers le premier dispositif de transposition de fréquence 129 et vers le deuxième dispositif de transposition de fréquence 137.

## Revendications

1. Circuit de réception multibandes (104) dans un téléphone mobile (101) susceptible de recevoir des premiers signaux radioélectriques transmis à une première fréquence porteuse selon une première norme de télécommunication mobile, et des deuxièmes signaux radioélectriques transmis à une deuxième fréquence porteuse selon une deuxième norme de télécommunication mobile, ledit circuit de réception comportant :
- au moins une antenne (102);
- une première voie de réception (106), pour recevoir des premiers signaux radioélectriques transmis à une première fréquence porteuse selon une première norme de télécommunication mobile, comportant un premier filtre passe-bande (116), relié à l'antenne (102), centré sur la première fréquence porteuse et un premier amplificateur (117) disposé en sortie du premier filtre passe-bande (116) ;
- une deuxième voie de réception (107), pour recevoir des deuxièmes signaux radioélectriques transmis à une deuxième fréquence porteuse selon une deuxième norme de télécommunication mobile, comportant un deuxième filtre passe-bande (118), relié à l'antenne (102), centré sur la deuxième fréquence porteuse et un deuxième amplificateur (119) disposé en sortie du deuxième filtre passe-bande (118);
- un premier mélangeur (120) pour réaliser une transposition de fréquence des premiers et des deuxièmes signaux à une fréquence intermédiaire, ledit premier mélangeur (120) étant relié, à une première entrée (121), à une sortie du premier amplificateur (117) et à une sortie du deuxième amplificateur (119);
- un dispositif d'oscillateur local (127) pour produire un premier signal hétérodyne, le dispositif d'oscillateur local (127) étant relié à une deuxième entrée (122) du premier mélangeur (120);
**caractérisé en ce qu'**il comporte :
- un système à fréquence intermédiaire comprenant un filtre passe-bande (128) à fréquence intermédiaire, centré sur la fréquence intermédiaire obtenue en sortie du premier mélangeur (120), le filtre passe-bande (128) à fréquence intermédiaire ayant une bande passante permettant de réaliser un filtrage de canal des premiers signaux reçus ;
- un aiguilleur (136), disposé en sortie du filtre passe-bande (128) à fréquence intermédiaire, par l'intermédiaire duquel le filtre passe-bande (128) à fréquence intermédiaire est relié à un deuxième dispositif de transposition de fréquence (137), vers lequel sont orientés les deuxièmes signaux reçus, lui-même relié à un dispositif de filtrage de canal (138; 139), et à un premier dispositif de transposition de fréquence (129), vers lequel sont orientés les premiers signaux reçus, lui-même relié directement à des circuits de traitement de signaux en bande de base (133 ;134).

2. Circuit de réception multibandes (104) dans un téléphone mobile (101) selon la revendication précédente **caractérisé en ce que** la première norme de télécommunication est la norme UMTS, et la deuxième norme de télécommunication est la norme GSM.

3. Circuit de réception multibandes (104) dans un téléphone mobile (101) selon l'une des revendications précédentes **caractérisé en ce que** le filtre passe-bande (128) à fréquence intermédiaire a une largeur de bande d'émission quatre mégahertz.

4. Circuit de réception multibandes (104) dans un téléphone mobile (101) selon l'une des revendications précédentes **caractérisé en ce que** le filtre passe-bande (128) à fréquence intermédiaire est centré sur une fréquence comprise ente 350 mégahertz et 450 mégahertz.

5. Circuit de réception multibandes (104) selon l'une des revendications précédentes **caractérisé en ce que** le dispositif d'oscillateur local (127) est constitué d'un premier oscillateur local et d'un deuxième oscillateur local, le premier oscillateur local produisant le premier signal hétérodyne à une première fréquence telle que les premiers signaux issus du premier mélangeur aient une fréquence porteuse correspondant à la fréquence centrale du filtre passe-bande (128) à fréquence intermédiaire, et le deuxième oscillateur local produisant le premier signal hétérodyne à une deuxième fréquence telle que les deuxièmes signaux issus du premier mélangeur (120) aient une fréquence porteuse correspondant à la fréquence centrale du filtre passe-bande (128) à fréquence intermédiaire.

6. Procédé de réception d'un signal dans un téléphone mobile (101) multibandes comportant
- au moins une antenne (102);
- une première voie de réception (106), pour recevoir des premiers signaux radioélectriques transmis à une première fréquence porteuse selon une première norme de télécommunication mobile, comportant un premier filtre passe-bande (116), relié à l'antenne (102), centré sur la première fréquence porteuse et un premier amplificateur (117) disposé en sortie du premier filtre passe-bande (116);
- une deuxième voie de réception (107), pour recevoir des deuxièmes signaux radioélectriques transmis à une deuxième fréquence porteuse selon une deuxième norme de télécommunication mobile, comportant un deuxième filtre passe-bande (118), relié à l'antenne (102), centré sur la deuxième fréquence porteuse et un deuxième amplificateur (119) disposé en sortie du deuxième filtre passe-bande (118);
**caractérisé en ce que** ledit procédé comporte les étapes consistant à :
- activer une des deux voies de réception (106 ;107) selon une bande de fréquence dans laquelle sont transmis des signaux reçus ;
- produire un signal hétérodyne en fonction de la voie de réception activée;
- réaliser une transposition de fréquence au moyen d'un premier mélangeur (120) à partir du signal hétérodyne pour obtenir des signaux à fréquence intermédiaire ;
- réaliser une opération de filtrage des signaux à fréquence intermédiaire au moyen d'un filtre passe-bande (128) à fréquence intermédiaire dont les caractéristiques sont déterminées pour que l'opération de filtrage soit une opération de filtrage de canal pour les premiers signaux transmis selon la première norme;
- orienter, au moyen d'un aiguilleur (136) relié au filtre passe-bande (128) à fréquence intermédiaire, les deuxièmes signaux vers un deuxième dispositif de transposition de fréquence (137), et les premiers signaux reçus vers un premier dispositif de transposition de fréquence (129);
- effectuer une opération de transposition de fréquence en sortie du filtre passe-bande (128) à fréquence intermédiaire pour transposer les premiers et les deuxièmes signaux reçus en signaux de bande de base ;
- effectuer une opération de filtrage de canal pour les deuxièmes signaux reçus avant une opération de traitement de signaux en bande de base, et effectuer directement les opérations de traitement de signaux en bande de base pour les premiers signaux reçus.

7. Procédé de réception d'un signal dans un téléphone mobile (101) multibandes selon la revendication précédente **caractérisé en ce que** la première norme est la norme UMTS, et la deuxième norme est la norme GSM.

## Patentansprüche

1. Mehrband-Empfangsschaltung (104) in einem Mobiltelefon (101) zum Empfangen von ersten funktechnischen Signalen, die bei einer ersten Trägerfrequenz nach einer ersten Mobilfunknorm übertragen werden, und von zweiten funktechnischen Signalen, die bei einer zweiten Trägerfrequenz nach einer zweiten Mobilfunknorm übertragen werden, umfassend:
- mindestens eine Antenne (102);
- einen ersten Empfangspfad (106) zum Empfangen von ersten funktechnischen Signalen, die bei einer ersten Trägerfrequenz nach einer ersten Mobilfunknorm übertragen werden, umfassend einen mit der Antenne (102) verbundenen ersten Bandpassfilter (116), der auf die erste Trägerfrequenz zentriert ist, und einen ersten Verstärker (117), der am Ausgang des ersten Bandpassfilters (116) angeordnet ist;
- einen zweiten Empfangspfad (107) zum Empfangen von zweiten funktechnischen Signalen, die bei einer zweiten Trägerfrequenz nach einer zweiten Mobilfunknorm übertragen werden, umfassend einen mit der Antenne (102) verbundenen zweiten Bandpassfilter (118), der auf die zweite Trägerfrequenz zentriert ist, und einen zweiten Verstärker (119), der am Ausgang des zweiten Bandpassfilters (118) angeordnet ist;
- einen ersten Mischer (120) zur Umsetzung der Frequenz der ersten und der zweiten Signale in eine Zwischenfrequenz, wobei der erste Mischer (120) mit einem ersten Eingang (121), einem Ausgang des ersten Verstärkers (117) und einem Ausgang des zweiten Verstärkers (119) verbunden ist;
- eine lokale Oszillatorvorrichtung (127) zum Erzeugen eines ersten Heterodyn-Signals, wobei die lokale Oszillatorvorrichtung (127) mit einem zweiten Eingang (122) des ersten Mischers (120) verbunden ist;
**dadurch gekennzeichnet, dass** sie folgendes aufweist:
- ein Zwischenfrequenzsystem umfassend einen Zwischenfrequenz-Bandpassfilter (128), der auf die am Ausgang des ersten Mischers (120) anliegende Zwischenfrequenz zentriert ist, wobei der Zwischenfrequenz-Bandpassfilter (128) eine Bandbreite aufweist, bei der eine Kanalfilterung der ersten empfangenen Signale durchgeführt werden kann;
- eine Weiche (136), die am Ausgang des Zwischenfrequenz-Bandpassfilters (128) angeordnet ist und über welche der Zwischenfrequenz-Bandpassfilter (128) mit einer mit einer Kanalfiltervorrichtung (138; 139) verbundenen zweiten Frequenzumsetzungsvorrichtung (137), auf die die zweiten empfangenen Signale ausgerichtet sind, und mit einer unmittelbar mit Schaltungen zur Signalverarbeitung im Basisband (133; 134) verbundenen ersten Frequenzumsetzungsvorrichtung (129), auf die die ersten empfangenen Signale ausgerichtet sind, verbunden ist.

2. Mehrband-Empfangsschaltung (104) in einem Mobiltelefon (101) nach dem vorangegangenen Anspruch, **dadurch gekennzeichnet, dass** die erste Telekommunikationsnorm die UMTS-Norm und die zweite Telekommunikationsnorm die GSM-Norm ist.

3. Mehrband-Empfangsschaltung (104) in einem Mobiltelefon (101) nach einem der vorangegangenen Ansprüche, **dadurch gekennzeichnet, dass** der Zwischenfrequenz-Bandpassfilter (128) eine Sendebandbreite von vier Megahertz hat.

4. Mehrband-Empfangsschaltung (104) in einem Mobiltelefon (101) nach einem der vorangegangenen Ansprüche, **dadurch gekennzeichnet, dass** der Zwischenfrequenz-Bandpassfilter (128) auf eine Frequenz im Bereich von 350 und 450 Megahertz zentriert ist.

5. Mehrband-Empfangsschaltung (104) nach einem der vorangegangenen Ansprüche, **dadurch gekennzeichnet, dass** die lokale Oszillatorvorrichtung (127) aus einem ersten lokalen Oszillator und einem zweiten lokalen Oszillator besteht, wobei der erste lokale Oszillator das erste Heterodyn-Signal bei einer derartigen ersten Frequenz erzeugt, dass die aus dem ersten Mischer stammenden ersten Signale eine Trägerfrequenz haben, die der Mittenfrequenz des Zwischenfrequenz-Bandpassfilters (128) entspricht, und wobei der zweite lokale Oszillator das erste Heterodyn-Signal bei einer derartigen zweiten Frequenz erzeugt, dass die aus dem ersten Mischer (120) stammenden zweiten Signale eine Trägerfrequenz haben, die der Mittenfrequenz des Zwischenfrequenz-Bandpassfilters (128) entspricht.

6. Verfahren zum Empfangen eines Signals in einem Mehrband-Mobiltelefon (101) umfassend:
- mindestens eines Antenne (102);
- einen ersten Empfangspfad (106) zum Empfangen von ersten funktechnischen Signalen, die bei einer ersten Trägerfrequenz nach einer ersten Mobilfunknorm übertragen werden, umfassend einen mit der Antenne (102) verbundenen ersten Bandpassfilter (116), der auf die erste Trägerfrequenz zentriert ist, und einen ersten Verstärker (117), der am Ausgang des ersten Bandpassfilters (116) angeordnet ist;
- einen zweiten Empfangspfad (107) zum Empfangen von zweiten funktechnischen Signalen, die bei einer zweiten Trägerfrequenz nach einer zweiten Mobilfunknorm übertragen werden, umfassend einen mit der Antenne (102) verbundenen zweiten Bandpassfilter (118), der auf die zweite Trägerfrequenz zentriert ist, und einen zweiten Verstärker (119), der am Ausgang des zweiten Bandpassfilters (118) angeordnet ist;
**dadurch gekennzeichnet, dass** das Verfahren die folgenden Verfahrensschritte aufweist:
- Aktivieren einer der beiden Empfangspfade (106; 107) in einem Frequenzband, in dem die empfangenen Signale übertragen werden;
- Erzeugen eines Heterodyn-Signals in Abhängigkeit des aktivierten Empfangspfades;
- Durchführen einer Frequenzumsetzung mittels eines ersten Mischers (120) ausgehend vom Heterodyn-Signal zur Erzeugung von Zwischenfrequenzsignalen;
- Filtern der Zwischenfrequenzsignale mittels eines Zwischenfrequenz-Bandpassfilters (128), dessen Merkmale derart festgelegt werden, dass die Filterung eine Kanalfilterung für die nach der ersten Norm übertragenen ersten Signale ist;
- Ausrichten der zweiten Signale auf eine zweite Frequenzumsetzungsvorrichtung (137) und der ersten empfangenen Signale auf eine erste Frequenzumsetzungsvorrichtung (129) mittels einer mit dem Zwischenfrequenz-Bandpassfilter (128) verbundenen Weiche (136);
- Durchführen einer Frequenzumsetzung am Ausgang des Zwischenfrequenz-Bandpassfilters (128) zur Umsetzung der ersten und der zweiten empfangenen Signale in Basisbandsignale;
- Durchführen einer Kanalfilterung für die zweiten empfangenen Signale vor einer Signalverarbeitung im Basisband und unmittelbares Durchführen der Signalverarbeitung im Basisband für die ersten empfangenen Signale.

7. Verfahren zum Empfangen eines Signals in einem Mehrband-Mobiltelefon (101) nach dem vorangegangenen Anspruch, **dadurch gekennzeichnet, dass**.die erste Norm die UMTS-Norm und die zweite Norm die GSM-Norm ist.

## Claims

1. A multiband receiver circuit (104) in a mobile phone (101) for receiving first radioelectric signals transmitted at a first carrier frequency according to a first mobile telecommunications standard and for receiving second radioelectric signals transmitted at a second carrier frequency according to a second mobile telecommunications standard, said receiver circuit comprising:
- at least one antenna (102);
- a first receiver path (106) for receiving first radioelectric signals transmitted at a first carrier frequency according to a first mobile telecommunications standard comprising a first band-pass filter (116) connected to the antenna (102), centered on the first carrier frequency and a first amplifier (117) disposed at the output of the first band-pass filter (116);
- a second receiver path (107) for receiving second radioelectric signals transmitted at a second carrier frequency according to a second mobile telecommunications standard comprising a second band-pass filter (118) connected to the antenna (102), centered on the second carrier frequency and a second amplifier (119) disposed at the output of the second band-pass filter (118);
- a first mixer (120) for performing a frequency conversion of the first and second signals into an intermediate frequency, said first mixer (120) being connected to a first input (121), an output of the first amplifier (117) and an output of the second amplifier (119);
- a local oscillator device (127) for producing a first heterodyne signal, said local oscillator device (127) being connected to a second input (122) of the first mixer (120);
**characterized in that** it comprises:
- an intermediate frequency system comprising an intermediate frequency band-pass filter (128) centered on the intermediate frequency obtained at the output of the first mixer (120), said intermediate frequency band-pass filter (128) having a bandwidth permitting to perform channel filtering of the first received signals;
- a switcher (136) that is disposed at the output of the intermediate frequency band-pass filter (128) and through which the intermediate frequency band-pass filter (128) is connected to a second frequency converter device (137) towards which the second received signals are oriented, said second frequency converter device being in turn connected to a channel filtering device (138; 139), and is connected to a first frequency converter device (129) towards which the first received signals are oriented, said first frequency converter device being in turn directly connected to circuits for baseband signal processing (133; 134).

2. The multiband receiver circuit (104) in a mobile phone (101) as set forth in the afore mentioned claim, **characterized in that** the first telecommunications standard is the UMTS standard and the second telecommunications standard is the GSM standard.

3. The multiband receiver circuit (104) in a mobile phone (101) as set forth in any one of the afore mentioned claims, **characterized in that** the intermediate frequency band-pass filter (128) has an emitter bandwidth of four megahertz.

4. The multiband receiver circuit (104) in a mobile phone (101) as set forth in any one of the afore mentioned claims, **characterized in that** the intermediate frequency band-pass filter (128) is centered on a frequency ranging between 350 megahertz and 450 megahertz.

5. The multiband receiver circuit (104) as set forth in any one of the afore mentioned claims, **characterized in that** the local oscillator device (127) is composed of a first local oscillator and of a second local oscillator, said first local oscillator producing the first heterodyne signal at such a first frequency that the first signals originating from the first mixer have a carrier frequency corresponding to the central frequency of the intermediate frequency band-pass filter (128) and the second local oscillator producing said first heterodyne signal at such a second frequency that the second signals originating from the first mixer (120) have a carrier frequency corresponding to the central frequqency of the intermediate frequency band-pass filter (128).

6. A method of receiving a signal in a multiband mobile phone (101), comprising
- at least one antenna (102);
- a first receiver path (106) for receiving first radioelectric signals transmitted at a first carrier frequency according to a first mobile telecommunications standard comprising a first band-pass filter (116) connected to the antenna (102), centered on the first carrier frequency and a first amplifier (117) disposed at the output of the first band-pass filter (116);
- a second receiver path (107) for receiving second radioelectric signals transmitted at a second carrier frequency according to a second mobile telecommunications standard comprising a second band-pass filter (118) connected to the antenna (102), centered on the second carrier frequency and a second amplifier (119) disposed at the output of the second band-pass filter (118);
**characterized in that** said method comprises the steps of:
- activating one of the two receiver paths (106; 107) according to a frequency band in which received signals are transmitted;
- producing a heterodyne signal as a function of the activated receiver path;
- performing a frequency conversion by means of a first mixer (120) starting from the heterodyne signal to obtain intermediate frequency signals;
- performing filtering of intermediate frequency signals using an intermediate frequency band-pass filter (128) the characteristics of which are determined so that the filtering performed is channel filtering the first signals transmitted according to the first standard;
- orienting the second signals toward a second frequency conversion device (137) and the first received signals toward a first frequency conversion device (129) using a switcher (136) connected to the intermediate frequency band-pass filter (128);
- performing a frequency conversion at the output of the intermediate frequency band-pass filter (128) to convert the first and the second received signals into baseband signals;
- performing channel filtering of the second received signals prior to performing baseband signal processing and directly performing baseband signal processing for the first received signals.

7. The method of receiving a signal in a multiband mobile phone (101) as set forth in the afore mentioned claim, **characterized in that** the first standard is the UMTS standard and the second standard the GSM standard.
